**Europäisches Patentamt**

**European Patent Office**

**Office européen des brevets**

(19)

(11) Veröffentlichungsnummer : **0 429 750 B1**

## (12) EUROPÄISCHE PATENTSCHRIFT

(45) Veröffentlichungstag der Patentschrift :
**03.02.93 Patentblatt 93/05**

(51) Int. Cl.⁵ : **C02F 1/72, B01J 23/80**

(21) Anmeldenummer : **90111972.7**

(22) Anmeldetag : **23.06.90**

(54) **Verfahren zur Oxidation von organischen Verunreinigungen in Abwässern.**

(30) Priorität : **23.11.89 DE 3938835**

(43) Veröffentlichungstag der Anmeldung :
**05.06.91 Patentblatt 91/23**

(45) Bekanntmachung des Hinweises auf die
Patenterteilung :
**03.02.93 Patentblatt 93/05**

(84) Benannte Vertragsstaaten :
**BE CH DE FR GB IT LI NL**

(56) Entgegenhaltungen :
**FR-A- 808 658**
**US-A- 3 823 088**
**US-A- 4 279 781**

(73) Patentinhaber : **SÜD-CHEMIE AG**
**Lenbachplatz 6**
**W-8000 München 2 (DE)**

(72) Erfinder : **Levec, Janez, Prof. Dr., Dep.of**
**Chem.**
**Chemical Technology, Murnikova 6**
**YU-61000 Ljubljana (YU)**

(74) Vertreter : **Patentanwälte Dipl. Ing. R.**
**Splanemann Dr. B. Reitzner Dipl. Ing. K.**
**Baronetzky**
**Tal 13**
**W-8000 München 2 (DE)**

EP 0 429 750 B1

## Beschreibung

Die Erfindung betrifft ein Verfahren zur Flüssigphasenoxidation von biologisch schwer abbaubaren toxischen organischen Verbindungen, die in Abwässern gelöst sind.

Viele Abwasserströme aus der chemischen Industrie enthalten organische Verunreinigungen, die entweder biologisch schwer abbaubar sind oder in so hohen Konzentrationen auftreten, daß die übliche biologische Behandlung nicht unmittelbar durchgeführt werden kann. Da die industrialisierten Länder daran interessiert sind, den Ausstoß an Verunreinigungen möglichst auf Null zu bringen, besteht ein großes Bedürfnis nach kompakten und leistungsfähigen Systemen zur wirksamen Entfernung von toxischen organischen Stoffen, die üblicherweise in das Wasser gelangen.

Neben den biologischen und chemischen Oxidationsverfahren werden verschiedene andere Systeme angewendet bzw. befinden sich in unterschiedlichen Entwicklungsstadien. Beispielsweise ist bekannt, daß die thermische Oxidation in der flüssigen Phase oder mit feuchter Luft (ZIMPRO-Verfahren) bei fortschrittlichen Abwasserbehandlungsanlagen ein großes Anwendungspotential hat. Bei den herrschenden Reaktionsbedingungen, z.B. 200 bis 300°C und 70 bis 130 bar in Anwesenheit einer Vielzahl von sauerstoffhaltigen Verbindungen, die stark korrodierend wirken, wird jedoch die Wirtschaftlichkeit des Verfahrens drastisch vermindert. Die Oxidation von verdünnten wäßrigen Lösungen von organischen Verunreinigungen unter Verwendung von festen Katalysatoren bietet bei der Abwasserreinigung eine Alternative zu der thermischen Oxidation in der flüssigen Phase. Bei diesen Verfahren werden die organischen Stoffe in einem Dreiphasen-Reaktionssystem bei milderen Bedingungen als bei dem thermischen Verfahren zu Kohlendioxid oxidiert.

Obgleich bekannt ist, daß verschiedene Kupferoxid-Zinkoxid-Katalysatoren mit unterschiedlichen Zusätzen die Oxidation von organischen Stoffen in wäßriger Phase ermöglichen, haben sich nicht alle Katalysatoren, die in der Lage sind, Oxidationsvorgänge zu katalysieren, als geeignet erwiesen (S. Goto, J. Levec und J.M. Smith "Trickle-Bed Oxidation Reactors" Catal.Rev.-Sci. Eng., 15(2), 187 (1977)). Bei der Oxidation von reinen organischen Flüssigkeiten finden sich keine Angaben über die Lebensdauer der Katalysatoren. Eine Desaktivierung infolge Auflösung der Metalle oder Oxide ist unwahrscheinlich. Bei Oxidationen in wäßrigen Lösungen verhindert eine derartige Desaktivierung die Verwendung von Katalysatoren, die von sich aus wasserlöslich sind oder während der Reaktion infolge Anwesenheit von Sauerstoff in einen löslichen Zustand übergeführt werden können, z.B. $Cr_2O_3$ in $CrO_3$, $MnO$ oder $MnO_2$ in $Mn_2O_7$.

Zur Erhöhung der Beständigkeit sollten wasserlösliche Oxide in das Gitter des Katalysatorträgers eingearbeitet werden. Die Reaktionsbedingungen (unterhalb 200°C und unterhalb 50 bar) stellen jedoch an die physikalischen und chemischen Eigenschaften eines Katalysators hohe Anforderungen.

In der US-A-38 23 088 ist ein Oxidationskatalysator zur Entfernung von organischen Stoffen aus Abwasserströmen beschrieben, der im wesentlichen aus Zinkaluminat besteht, das mit mindestens 2 Metallen promotiert ist, die Oxidationsreaktionen katalysieren, wie Kupfer, Mangan, Nickel, Kobalt, Wismut, seltene Erden (insbesondere die seltenen Erden der Cergruppe wie Lanthan), Iridium und dergl., sowie Kombinationen dieser Metalle. Der beste Katalysator, der 4 Gew.-% Kupfer, 2 Gew.-% Mangan und 1 Gew.-% Lanthan auf Zinkaluminat enthält, ist in der Lage, die Flüssigphasen-Oxidation bei 250°C und 45 bar zu katalysieren. Durch Einbau eines seltenen Erdmetalls in das Katalysatorsystem werden die Aktivität und die Lebensdauer des Katalysators erhöht.

Ein derartiger Katalysator wurde auch bereits für die Oxidation von Essigsäurelösungen verwendet (J. Levec, M.Herskowitz und J.M. Smith, "An Active Catalyst for the Oxidation of Acetic Acid Solutions". - AIChE Journal, 22, 1976, 919; J.Levec und J.M. Smith, "Oxidation of Acetic Acid Solutions in a Trickle-Bed Reactor" - AIChE Journal, 22, 1976, 159).

In der US-A-41 15 264 ist ein Verfahren zur weiteren Erhöhung der Lebensdauer derartiger Katalysatoren bei der katalytischen Flüssigphasen-Oxidation von organischen Verunreinigungen in Abwässern angegeben; bei diesem Verfahren wird dem Abwasserstrom eine ausreichende Menge von Alkaliionen zugesetzt.

Nach der US-A-39 92 295 ist ein Katalysator, der 27 Gew.-% Kupfer, 41 Gew.-% Mangan, weniger als 4 Gew.-% eines Gemisches aus Metallen wie Eisen, Magnesium, Silicium, Calcium, Chrom, Aluminium und Nickel (Rest Sauerstoff) enthält, in der Lage, organische Stoffe in Abwässern zu oxidieren.

Die bekannten Katalysatoren hatten jedoch den Nachteil, daß sie ihre Aktivität nach kürzester Zeit verloren, wahrscheinlich deshalb, weil die aktiven Komponenten während der Reaktion in der wäßrigen Phase bei höheren Temperaturen herausgelöst wurden.

Der Erfindung liegt die Aufgabe zugrunde, bei einem Verfahren der der eingangs definierten Art die Aktivität und Stabilität der verwendeten Katalysatoren zu verbessern.

Die Erfindung betrifft somit ein Verfahren zur Flüssigphasenoxidation von biologisch schwer abbaubaren toxischen organischen Verunreinigungen, die in Abwässern gelöst sind, wobei ein Abwasserstrom in Gegenwart eines Kupferoxid-Aluminiumoxid-Katalysators mit einem Sauerstoff- oder Luftstrom in Berührung ge-

2

bracht wird. Das Verfahren ist dadurch gekennzeichnet, daß man einen Katalysator verwendet, der 30 bis 50 Gew.-% Kupferoxid, 40 bis 50 Gew.-% Zinkoxid, 0 bis 4 Gew.-% Chromoxid und 5 bis 15 Gew.-% Aluminiumoxid enthält.

Die wesentlichen Komponenten dieses Katalysators und deren Anteile sind mit denen des Katalysators nach der DE-A-39 38 835 vergleichbar. Der ältere Katalysator enthielt 20 bis 40 Gew.-% Kupferoxid, 15 bis 25 Gew-% Zinkoxid, 20 bis 40 Gew-% Aluminiumoxid und 2 bis 4 Gew-% Chromoxid. Dieser Katalysator war in der Lage, stabile organische Substanzen, wie Phenol, Chlorphenol, Nitrophenol, Butylalkohol, Methylvinylketon und Naphtalinsulfonat, in wäßrigen Lösungen oxidativ zu zersetzen.

Bei der Weiterentwicklung dieser Katalysatoren wurde jedoch festgestellt, daß eine weitere Verbesserung der Aktivität dieser Katalysatoren erzielt werden konnte, wenn der Anteil des Zinkoxids gegenüber dem Anteil des Aluminiumoxids erhöht wurde, wobei auch bei Wegfall des Chromoxids kein Aktivitätsabfall eintrat.

Der erfindungsgemäß verwendete Katalysator ist einerseits bei Temperaturen unterhalb von etwa 200°C aktiv, andererseits bei diesen Temperaturen überraschenderweise sehr stabil, da die aktiven Komponenten nicht oder nur in einem äußerst geringen Umfang herausgelöst werden. Der Grund für dieses Verhalten ist nicht genau bekannt, so daß ein überraschender Effekt vorliegt.

Vorzugsweise verwendet man einen Katalysator, der etwa 42 $\pm$2 Gew.-% Kupferoxid, etwa 47 $\pm$2 Gew.-% Zinkoxid und etwa 10 $\pm$2 Gew.-% Aluminiumoxid enthält.

Der erfindungsgemäß verwendete Katalysator zeigt eine ausreichende katalytische Aktivität bei der Oxidation von organischen Substanzen in der flüssigen Phase. Die Aktivität und die Lebensdauer läßt sich jedoch noch weiter steigern, wenn man einen Katalysator verwendet, der in einer oxidierenden Atmosphäre thermisch vorbehandelt worden ist. Eine solche Vorbehandlung erfolgt vorzugsweise in einem Sauerstoffstrom etwa 2 Stunden bei etwa 600 bis 1000°C. Besonders bevorzugt verwendet man einen bei etwa 860°C vorbehandelten Katalysator.

Das Zinkoxid und das Aluminiumoxid bilden bei diesen Temperaturen eine Struktur vom Spinelltyp, in die wahrscheinlich ein Teil des Kupferoxids, und soweit vorhanden, das Chromoxid eingebaut sind.

Der erfindungsgemäß verwendete Katalysator fördert die oxidative Zersetzung von Verbindungen, wie aromatischen Sulfonaten, Phenolen, Alkoholen oder Ketonen, die häufig stark toxisch, biologisch schlecht abbaubar sind und an Aktivkohle praktisch nicht adsorbierbar sind, ohne daß Metalle aus den Gruppen IIIB, IVB, VB, VIB (gegebenenfalls mit Ausnahme von Chrom), VIIB und VIII des Periodensystems sowie seltene Erden zugesetzt werden müssen. Der Katalysator kann in zylindrischer Form oder in Form von Strangpreßlingen verwendet werden, wobei seine Größe dem jeweiligen Verwendungszweck angepaßt wird. Der Katalysator kann in einem Dreiphasen-Festbettreaktor (entweder im Gleichstrom nach abwärts oder im Gleichstrom nach aufwärts) verwendet werden.

Die Erfindung ist durch die nachstehenden Beispiele erläutert.

## Beispiel 1

Vorbehandlung des Katalysators

(a) Ein Katalysator in Tablettenform, der etwa 42 Gew.-% Kupferoxid, 47 Gew.-% Zinkoxid und 10 Gew.-% Aluminiumoxid (Rest Kohlenstoff) enthielt, wurde zerkleinert und gesiebt, wobei Teilchen mit einer lichten Maschenweite von etwa 0,50 bis 0,35 mm erhalten wurden. Proben des abgesiebten Materials wurden in einem Sauerstoffstrom bei etwa 600°C, 860°C bzw. 1000°C calciniert.

Die Katalysatorproben wurden dann über Nacht abkühlen gelassen, um einen Wärmeschock bei der Entnahme aus dem Ofen zu vermeiden. Die Oberfläche des bei 860°C calcinierten Katalysators betrug 9,0 m²/g, während die Oberfläche des unbehandelten Katalysators 55 m²/g betrug. Die Oberflächen der bei den anderen Temperaturen calcinierten Katalysatoren wurden nicht bestimmt.

(b) Ein nicht erfindungsgemäßer Katalysator entsprechend der DE-A-39 38 835, der etwa 40 Gew.-% Kupferoxid, 20 Gew.-% Zinkoxid, 3,5 Gew.-% Chromoxid und 30 Gew.-% Aluminiumoxid enthielt, wurde in der gleichen Weise wie der Katalysator (a) zerkleinert, gesiebt und bei 860°C calciniert. Die spezifische oberfläche des calcinierten Katalysators betrug 8,5 m²/g, die des unbehandelten Katalysators 130 m²/g.

## Beispiel 2

Auswertung des Katalysators

Der unbehandelte Katalysator von Beispiel 1(b) und die nach dem Calcinieren bei 600°C, 860°C bzw. 1000°C erhaltenen Katalysatoren von Beispiel 1(a) und (b) wurden zur Oxidation von wäßrigen Phenol-Modellösungen verwendet. Ein Katalysator nach der US-PS 3 823 088 mit 4 % Kupfer, 2 % Mangan und 1 % Lanthan auf Zinkaluminat wurde als Vergleichskatalysator verwendet. Er wurde durch Imprägnieren von calciniertem Zinkaluminat mit einer Lösung der Metallnitrate hergestellt. Die nach Beispiel 1 hergestellten Katalysatoren sowie der unbehandelte Katalysator und der Vergleichskatalysator wurden gesiebt, wobei Teilchen mit einer lichten Maschenweite von etwa 0,25 bis 0,15 mm erhalten wurden.

Die Katalysatoren wurden in einem 2-Liter-Autoklavenreaktor (Parr.Inst. Co., IPP.) getestet, der mit einem magnetisch angetriebenen Propellerrührer sowie mit Temperatur- und Druckregeleinrichtungen versehen war. In einem typischen Ansatz wurden 5 g eines Katalysators mit einer lichten Maschenweite von etwa 0,25 bis 0,15 mm in den Reaktor eingefüllt, der 1,0 Liter Wasser und 5,0 g Phenol enthielt. Der Inhalt des Reaktors wurde auf 130°C erhitzt, worauf Sauerstoff mit einer Geschwindigkeit von 32 Liter/Stunden (STP) kontinuierlich durch die Suspension geleitet wurde. Der Gesamtdruck betrug 6 bar, der Sauerstoff-Partialdruck 3 bar. Es wurden periodisch repräsentative Proben abgezogen, und der Katalysator wurde sofort von der wäßrigen Phase abzentrifugiert. Die wäßrige Phase wurde nach einem üblichen HPLC-Verfahren auf den Restgehalt an organischen Stoffen analysiert. Das Phenol wurde über verschiedene Zwischenprodukte zu Kohlendioxid oxidiert. Die verwendeten Katalysatoren zeigten eine Induktionsperiode, die stark von den Vorbehandlungsbedingungen abhing. Die relativen Werte für die Induktionsperiode und die Zeit, die zur Umwandlung des Phenols und aller Zwischenprodukte in Kohlendioxid erforderlich waren, sind für die thermisch behandelten Katalysatoren, für den unbehandelten Katalysator und für den Vergleichskatalysator in Tabelle I angegeben, wobei die entsprechenden Werte für den unbehandelten Katalysator mit 1,0 angesetzt wurden.

## Tabelle I

Relative Induktionsperiode und Zeit, die zur Umwandlung des Phenols und der Zwischenprodukte in Kohlendioxid erforderlich war

| Temperatur der Vorbehandlung (°C) | Relative Induktions- periode des Kat. von | | Relative Zeit zur Umwandlung des Phenols mit dem Kat. von | |
|---|---|---|---|---|
| | Beisp. 1(a) | 1(b) | Beisp. 1(a) | 1(b) |
| 600 | 0,65 | 0,7 | 0,9 | 1,0 |
| 860 | 0,18 | 0,2 | 0,63 | 0,66 |
| 1000 | 0,3 | 0,3 | 1,0 | 1,0 |
| Unbehandelter Katalysator | 1,0 (90 min) | | 1,0 (150 min) | |
| Vergleichs- katalysator | 0,3 – 0,4 | | 2,0 | |

Die Versuchswerte von Tabelle I zeigen, daß die erfindungsgemäß verwendeten Katalysatoren bei der Phenoloxidation sehr aktiv sind. Die thermisch vorbehandelten Katalysatoren nach Beispiel 1(a) und (b) sind wenigstens zweimal so aktiv wie der Vergleichskatalysator. Die höchste Aktivität wird mit den bei 860°C vorbehandelten Katalysatoren erreicht, wobei der chromoxidfreie Katalysator nach Beispiel 1(a) noch etwas besser ist als der chromoxidhaltige Katalysator nach Beispiel 1(b). Diese Katalysatoren haben weiterhin eine hohe Stabilität. In drei aufeinanderfolgenden Phenoloxidationsversuchen mit derselben Katalysatorprobe wurde eine ausgezeichnete Reproduzierbarkeit bei der Umwandlung des Phenols und der Zwischenprodukte sowie eine konstante Aktivität gefunden. Nach dem ersten Versuch mit dem unbehandelten Katalysator von Beispiel 1(b) betrug die nach der üblichen Atomabsorptionsspektrometrie bestimmte $Cr^{(6+)}$-Konzentration in der wäßrigen Phase weniger als $0,06 \mu g/ml$. Bei dem bei 860°C vorbehandelte Katalysator von Beispiel 1(b) lag die $Cr^{(6+)}$-

Konzentration in der wäßrigen Phase nach dem ersten Versuch unterhalb der Nachweisgrenze (< 0,05 µg/ml).

## Beispiel 3

Oxidation von organischen Modellverunreinigungen

In einem typischen Versuch wurden Proben von jeweils 5 g der nach Beispiel 1(a) und (b) bei 860°C vorbehandelten Katalysatoren mit einer lichten Maschenweite von 0,25 bis 0,15 mm in den Reaktor von Beispiel 2 eingefüllt, der 1,0 Liter Wasser und die in Tabelle II angegebenen Mengen an organischen Modellverunreinigungen, nämlich 2-Chlorphenol, 4-Nitrophenol, tert. Butylalkohol bzw. Methylvinylketon enthielt. Die Versuchsdurchführung war die gleiche wie in Beispiel 2. Die wäßrigen Lösungen wurden nach dem Abzentrifugieren der Katalysatorproben gaschromatographisch (bei t-Butylalkohol) und nach dem HPLC-Verfahren im Fall der anderen Verunreinigungen untersucht. Die organischen Modellverunreinigungen wurden über verschiedene Zwischenprodukte in Kohlendioxid umgewandelt. Die zur Umwandlung der ursprünglich vorhandenen organischen Verunreinigungen und aller Zwischenprodukte in Kohlendioxid erforderlichen Zeiten sind in Tabelle II angegeben.

## Tabelle II

Ergebnisse der Flüssigphasenoxidation von Modellverunreinigungen über einen Katalysatoren, der bei 860°C vorbehandelt worden war. Reaktionsbedingungen: Temperatur 130°C; Gesamtdruck: 6 bar; Sauerstoff-Partialdruck: 3 bar

| Verunreinigung | Anfangskonzentration der Modell-Verunreinigung (g/l) | Zeit zur Umwandlung d. urspr.Verunreinigung u. d.Zwischenprod.(Minuten) | |
| --- | --- | --- | --- |
| | | Kat.v.Beisp. 1(a) | 1(b) |
| Phenol | 5,0 | 98 | 100 |
| 2-Chlorphenol | 4,5* | 100 | 100 |
| 4-Nitrophenol | 2,0* | 95 | 100 |
| t-Butylalkohol | 5,0 | 145 | 140 |
| Methylvinylketon | 0,5* | 130 | 120 |

\* ungefähre Löslichkeitsgrenze in Wasser

Die Versuchsergebnisse von Tabelle II zeigen, daß der nach Beispiel 1 bei 860°C vorbehandelte Katalysator bei der Umwandlung der schwer oxidierbaren organischen Modellverunreinigungen in Kohlendioxid bei verhältnismäßig milden Reaktionstemperaturen sehr wirksam war. Bei Nitrophenol wurde keine Induktionsperiode gefunden. In der wäßrigen Phase war bei dem Katalysator nach Beispiel 1(b) nach Versuchsbeendigung kein $Cr^{(6+)}$ (Atomabsorptionsspektrometrie) nachweisbar.

## Beispiel 4

Oxidation von aromatischem Sulfonat

10 g der nach Beispiel 1(a) und (b) bei 860°C vorbehandelten Katalysatoren mit einer lichten Maschenweite von 0,25 bis 0,15 mm wurden in den Reaktor von Beispiel 2 eingefüllt, der 1,0 Liter Wasser und 5,0 g Natriumnaphthalinsulfonat enthielt. Die Versuchsdurchführung war die gleiche wie in Beispiel 2. Die wäßrige Lösung wurde nach dem Abzentrifugieren der Katalysatoren nach der üblichen HPLC-Methode sowie nach der Kapillar-Gaschromatographie-Methode mit einem massenselektiven Detektor analysiert. Bei einer Temperatur von 200°C, einem Gesamdruck von 18 bar und einem Sauerstoff-Partialdruck von 3,5 bar waren bei beiden Katalysatoren das Natriumnaphthalinsulfonat sowie alle Zwischenprodukte nach 320 Minuten in Kohlendioxid umgewandelt.

Dieser Versuch zeigt, daß stark toxische, biologisch schlecht abbaubare und an Aktivkohle fast nicht absorbierbare organische Verbindungen bei relativ milden Reaktionsbedingungen quantitativ in Kohlendioxid umgewandelt werden. Nach Beendigung des Versuchs konnte bei dem Katalysator von Beispiel 1(b) in der wäßrigen Phase nach der Atomabsorptionsspektrometrie kein $Cr^{(6+)}$ nachgewiesen werden.

## Patentansprüche

1. Verfahren zur Flüssigphasenoxidation von biologisch schwer abbaubaren toxischen organischen Verunreinigungen, die in Abwässern gelöst sind, wobei ein Abwasserstrom in Gegenwart eines Kupferoxid-Aluminiumoxid-Katalysators mit einem Sauerstoffoder Luftstrom in Berührung gebracht wird, dadurch gekennzeichnet, daß man einen Katalysator verwendet, der 30 bis 50 Gew.-% Kupferoxid, 40 bis 50 Gew.-% Zinkoxid, 0 bis 4 Gew.-% Chromoxid und 5 bis 15 Gew.-% Aluminiumoxid enthält.

2. Verfahren nach Anspruch 1, dadurch gekennzeichnet, daß man einen Katalysator verwendet, der etwa 42 ±2 Gew.-% Kupferoxid, etwa 47 ±2 Gew.-% Zinkoxid und etwa 10 ±2 Gew.-% Aluminiumoxid enthält.

3. Verfahren nach Anspruch 1 oder 2, dadurch gekennzeichnet, daß man einen Katalysator verwendet, der in einer oxidierenden Atmosphäre thermisch vorbehandelt worden ist.

4. Verfahren nach Anspruch 3, dadurch gekennzeichnet, daß man einen in einem Sauerstoffstrom etwa 2 Stunden bei etwa 600 bis 1000°C vorbehandelten Katalysator verwendet.

5. Verfahren nach Anspruch 4, dadurch gekennzeichnet, daß man einen bei etwa 860°C vorbehandelten Katalysator verwendet.

## Claims

1. A process for the liquid phase oxidation of toxic organic impurities which are degradable only with difficulty and which are dissolved in waste waters, wherein a flow of waste water is brought into contact, in the presence of a copper oxide-aluminium oxide catalyst, with a stream of oxygen or air, characterised in that a catalyst is used which contains 30 to 50 % by weight of copper oxide, 40 to 50 % by weight of zinc oxide, 0 to 4 % by weight of chromium oxide and 5 to 15 % by weight of aluminium oxide.

2. A process according to Claim 1, characterised in that a catalyst is used which contains approximately 42 ±2 % by weight of copper oxide, approximately 47 ±2 % by weight of zinc oxide and approximately 10 ±2 % by weight of aluminium oxide.

3. A process according to Claim 1 or 2, characterised in that a catalyst is used which has been thermally pretreated in an oxidising atmosphere.

4. A process according to Claim 3, characterised in that a catalyst is used which has been pretreated in an oxygen stream for about 2 hours at approximately 600 to 1000°C.

5. A process according to Claim 4, characterised in that a catalyst is used which has been pretreated at approximately 860°C.

## Revendications

1. Procédé pour l'oxydation en phase liquide d'impuretés organiques toxiques, difficilement dégradables biologiquement, qui sont dissoutes dans des eaux résiduaires, suivant lequel un courant d'eau résiduaire est amené en contact avec un courant d'oxygène ou d'air en présence d'un catalyseur d'oxyde de cuivre-oxyde d'aluminium, caractérisé par le fait qu'on utilise un catalyseur qui contient 30 à 50% en poids d'oxyde de cuivre, 40 à 50% en poids d'oxyde de zinc, 0 à 4% en poids d'oxyde de chrome, et 5 à 15% en poids d'oxyde d'aluminium.

2. Procédé selon la revendication 1, caractérisé par le fait qu'on utilise un catalyseur qui contient environ 42 ±2% en poids d'oxyde de cuivre, environ 47 ±2% en poids d'oxyde de zinc, et environ 10 ±2% en poids d'oxyde d'aluminium.

3. Procédé selon l'une des revendications 1 ou 2, caractérisé par le fait qu'on utilise un catalyseur qui a été soumis à un prétraitement thermique dans une atmosphère oxydante.

4. Procédé selon la revendication 3, caractérisé par le fait qu'on utilise un catalyseur prétraité dans un courant d'oxygène pendant environ 2 heures à une température d'environ 600 à 1000°C.

5. Procédé selon la revendication 4, caractérisé par le fait qu'on utilise un catalyseur prétraité à environ 860°C.